# EUROPEAN PATENT APPLICATION

(11) **EP 1 154 295 A2**
(43) Date of publication of application: **14.11.2001**
(21) Application number: 01110054.2
(22) Date of filing: 27.04.2001
(51) Int. Cl.: G02B 6/255

(54) **Method of fabricating optical fiber fusion splice and optical device**

(30) Priority: 09.05.2000 JP 2000136265
(71) Applicant: Sumitomo Electric Industries, Ltd., Osaka-shi, Osaka 541-0041 (JP)
(72) Inventor: Nakamura, Motonori, Sumitomo Electric Indust. Ltd, Yokohama-shi, Kanagawa 244-8588 (JP); Ohga, Yuichi, Sumitomo Electric Indust. Ltd, Yokohama-shi, Kanagawa 244-8588 (JP); Yokota, Daisuke, Sumitomo Electric Indust. Ltd, Yokohama-shi, Kanagawa 244-8588 (JP)
(74) Representative: HOFFMANN - EITLE

(57) **Abstract**

Two optical fibers 10, 20 to be spliced are prepared (Fig. 1A), coatings of resin 12, 22 are removed from end portions of the respective optical fibers 10, 20 to expose glass fibers 11, 21 (Fig. 1B), the glass fibers 11, 21 are aligned each other (Fig. 1C), and a fusion step is carried out to heat the end faces of the glass fibers 11, 21 to cause fusion thereof to form a fusion-spliced portion A (Fig. 1D). After that, a thermal-strain-removing step is carried out to remove thermal strain by a heating treatment of a wider region R₂ than a heated region R₁ of the fusion-spliced portion A, at a temperature of not less than 500°C nor more than 1500°C (Fig. 1E).

## Description

### BACKGROUND OF THE INVENTION

### Field of the Invention

The present invention relates to an optical fiber apparatus having a fusion-spliced portion in which two optical fibers are fusion-spliced, and a fabrication method thereof.

### Related Background Art

As methods of cascade connection between two optical fibers, there are connector splice and fusion splice. Among these, the fusion splice is a method of aligning two optical fibers each other and heating end faces of the respective fibers to cause fusion thereof, and has the advantage of low splice loss. On the other hand, however, the fusion splice had the problem that the mechanical strength of the fusion-spliced portion was lower than that of the other portions of the optical fibers. Conventionally, in order to reinforce the fusion-spliced portion in the optical fiber apparatus including it, a steel wire was placed along the fusion-spliced portion and the whole of these were coated with resin.

### SUMMARY OF THE INVENTION

The reinforcing method of the spliced portion with the steel wire as described above, however, has the following problems. Namely, the outside diameter of the reinforced portion (the portion along with the steel wire) including the spliced portion becomes larger than that of the other portions of the optical fibers. With increase in the outside diameter of the reinforced portion along with the steel wire, stress will be exerted on the optical fibers around this reinforced portion during the procedure of forming a cable from the two optical fibers spliced in cascade connection including this reinforced portion, during the procedure of forming a module by winding the fibers around a bobbin, or during other mounting procedures, so that it will raise the risk of fracture of the optical fibers or increase loss of light propagating in the optical fibers. It also becomes harder to bend this reinforced portion during the procedure of winding the two optical fibers including the reinforced portion around the bobbin. For the optical fiber apparatus having the fusion-spliced portion, as described, it is sometimes undesirable to employ the reinforcement of the fusion-spliced portion with the steel wire, depending upon mounting forms or uses.

The present invention has been accomplished to solve the above problems and an object of the present invention is thus to provide an optical fiber apparatus that secures the satisfactory mechanical strength of the fusion-spliced portion without use of the reinforcement with the steel wire, and a method of fabricating the optical fiber apparatus.

A fabrication method of optical fiber apparatus according to the present invention is a method of fabricating optical fiber apparatus having a fusion-spliced portion in which respective end faces of two optical fibers are spliced each other by fusion splice, which comprises a fusion step of heating the end faces of the two optical fibers to cause fusion thereof, thereby forming the fusion-spliced portion, and a thermal-strain-removing step of removing thermal strain by a heating treatment of a wider region than the heated area of the fusion-spliced portion, at a temperature of not less than 500°C nor more than 1500°C.

There occurs thermal strain in and around the fusion-spliced portion during the fusion step, but this thermal strain is removed by the heating treatment of the wider region than the heated area of the fusion-spliced portion, at the temperature of not less than 500°C nor more than 1500°C according to the present invention, which ensures the satisfactory mechanical strength in and around the fusion-spliced portion of the optical fiber apparatus. Here the "heated region" stated in the present invention means a region in which the temperature becomes 500°C and higher during the heating of the optical fibers. The fusion-spliced portion is cooled after the removal of the thermal strain, and the removed state of thermal strain is also maintained during this cooling, thus ensuring the adequate mechanical strength in and around the fusion-spliced portion of the optical fiber apparatus. A rate of the cooling is preferably not more than 4000°C/min.

The fabrication method of optical fiber apparatus according to the present invention is characterized in that in the thermal-strain-removing step the aforementioned heating treatment is carried out by use of arc discharge, flame generated with supply of inflammable gas and oxygen gas to a burner, or a heater. In either of these cases, the optical fibers are heated at the appropriate temperature in and around the fusion-spliced portion thereof during the thermal-strain-removing step, so as to remove the thermal strain caused during the fusion step. The heating by arc discharge is a preferred method, because a fusion splicing machine can be used as it is. The heating by the burner is another preferred method, because it permits distribution heating in and around the fusion-spliced portion of the optical fiber apparatus and also permits use of a compact heating unit. The heating by the heater is another preferred method, because it permits distribution heating in and around the fusion-spliced portion of the optical fiber apparatus and keeps a heating atmosphere clean.

An optical fiber apparatus according to the present invention is characterized by being fabricated by the aforementioned fabrication method of optical fiber apparatus according to the present invention. Since the thermal strain caused in the fusion step is removed from this optical fiber apparatus during the thermal-strain-removing step, the satisfactory mechanical strength is ensured in and around the fusion-spliced portion, without use of the reinforcement with the steel wire.

The optical fiber apparatus stated herein means one having the fusion-spliced portion in which two or more optical fibers are spliced each other by fusion splice, and involves optical fiber transmission lines to be laid, modules or bobbins, and other forms.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since the invention can be practised within the scope of the appended claims with various changes and modifications.

### BRIEF DESCRIPTION OF THE DRAWINGS

Fig. 1A to Fig. 1F are step diagrams to illustrate a fabrication method of optical fiber apparatus according to the present invention;
Fig. 2 is a schematic block diagram of a system for carrying out the thermal-strain-removing step in the fabrication method of optical fiber apparatus according to the present invention;
Fig. 3 is a perspective view to show a heating system provided with a burner;
Fig. 4 is a perspective view to show a heating system provided with a heater;
Fig. 5 is a perspective view to show a heating system provided with a discharge section for arc discharge; and
Fig. 6 is a graph to show a relation between heating temperature in the thermal-strain-removing step and 50% rupture strength.

### DESCRIPTION OF THE PREFERRED EMBODIMENTS

The preferred embodiments of the present invention will be described hereinafter in detail with reference to the accompanying drawings. It is noted that in the description of the drawings the same elements will be denoted by the same reference symbols and redundant description will be omitted.

First described is how the inventors accomplished the present invention. The inventors researched the reason why the mechanical strength of the fusion-spliced portion was lower than that of the other portions of the optical fibers in the optical fiber apparatus having the fusion-spliced portion, and found that the cause was the thermal strain due to the local heating at high temperature only at and in the close vicinity of the end faces of the two optical fibers during the fusion step. Describing in more detail, there occurs the thermal strain in the fusion-spliced portion during the fusion procedure of heating the glass end faces of the respective optical fibers to the temperature at which glass is adequately softened, and the thermal strain remains during cooling of the optical fibers thereafter. We can observe the thermal strain remaining in this fusion-spliced portion with an interference microscope or the like. The thermal strain is greatest at the both ends of the heated region of the fusion-spliced portion. If the thermal strain is left in the fusion-spliced portion, the fusion-spliced portion can break during a post-step, so as to lower the fabrication yield of optical fiber apparatus. In this case the optical fiber apparatus is most fragile at the both ends of the heated region during the fusion splice. The present invention has been accomplished based on the above knowledge and involves the removal of thermal strain by the heating treatment of heating the region in and around the fusion-spliced portion at the appropriate temperature after the fusion step, thereby ensuring the sufficient mechanical strength of the fusion-spliced portion of optical fiber apparatus.

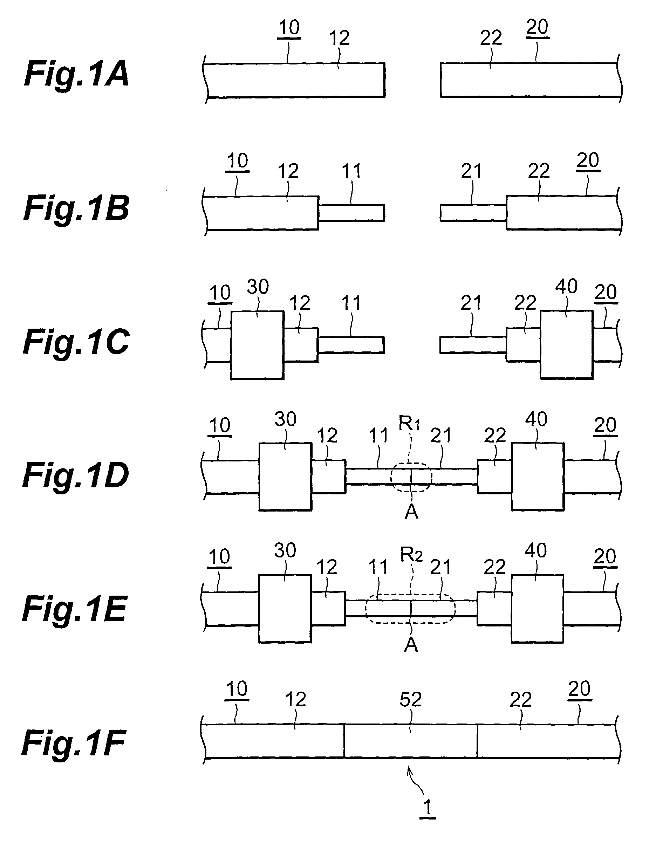

In the next place, the steps in the fabrication method of optical fiber apparatus according to the present embodiment will be described. Fig. 1A to Fig. 1F are the step diagrams to illustrate the fabrication method of optical fiber apparatus according to the present embodiment. In the first step, two optical fibers 10 and 20 to be spliced each other are prepared (Fig. 1A). The optical fibers 10, 20 are those formed by coating the periphery of silica-glass-based glass fibers 11, 21 with resin 12, 22. Then the coatings of resin 12, 22 are removed from the end portions of the respective optical fibers 10, 20, thereby exposing the glass fibers 11, 21 in the end portions (Fig. 1B). The removal of the coatings of resin 12, 22 is chemically carried out, for example, with hot concentrated sulfuric acid and thereafter, the sulfuric acid is washed away with water or acetone. Then end portions of the glass fibers 11, 21 are cut by a fiber cutter, these optical fibers 10, 20 after the removal of the coatings from their end portions are held by fiber holders 30, 40 of a fusion splicer, and the glass fibers 11, 21 are aligned each other (Fig. 1C).

After the alignment, the fusion step is carried out to heat the end faces of the glass fibers 11, 21 to cause fusion thereof to form the fusion-spliced portion A (Fig. 1D). Specifically, the end faces of the glass fibers 11, 21 are preheated and shaped, the end faces of the glass fibers 11, 21 are pressed against each other to be spliced, and the glass fibers are shaped and heated around the fusion-spliced portion A. A heating unit used herein will be described later. A region R₁ surrounded by a dashed line in the figure represents the heated region in this fusion step. The heated region is a region in which the temperature becomes 500°C and higher. In the fusion procedure, the temperature at the both ends of the heated region R₁ is lower than the temperature of the fiber spliced portion in the center, so that the thermal strain is large near the both ends of the heated region in the glass fibers 11, 21, so as to make the fibers easy to break there.

After the fusion step, the thermal-strain-removing step is carried out to remove the thermal strain by the heat treatment of a wider region R₂ than the above heated region R₁ in and around the fusion-spliced portion A, at the temperature of not less than 500°C nor more than 1500°C (Fig. 1E). In other words, the region of the temperature of 500°C and higher in this thermal-strain-removing step, is wider than that during the heating in the above fusion step. The heating temperature range of 500°C to 1500°C in this thermal-strain-removing step is not more than the softening temperature of the glass fibers 11, 21 and is sufficient to remove the thermal strain. A sufficient heating period during the thermal-strain-removing step can be as short as about several seconds to about several ten seconds. The heating treatment in this thermal-strain-removing step removes the thermal strain caused around the fusion-spliced portion A during the fusion step and recovers the mechanical strength around the fusion-spliced portion A. Then the region in and around the fusion-spliced portion A is cooled after the thermal-strain-removing step. A cooling rate in this cooling step is preferably not more than 4000°C/min.

After the cooling, the glass fibers 11, 21 exposed are again coated with resin 52 (Fig. 1F). The outside diameter of this coating of resin 52 is approximately equal to that of the coatings of resin 12, 22 of the optical fibers 10, 20. After that, predetermined mounting procedures, e.g. a procedure of winding the optical fibers 10, 20 including the fusion-spliced portion A around a bobbin, are carried out, thereby fabricating an optical fiber apparatus 1. The optical fiber apparatus 1 fabricated in this way has sufficient mechanical strength in and around the fusion-spliced portion A without use of the reinforcement with the steel wire, because the thermal strain caused during the fusion step is removed in the thermal-strain-removing step.

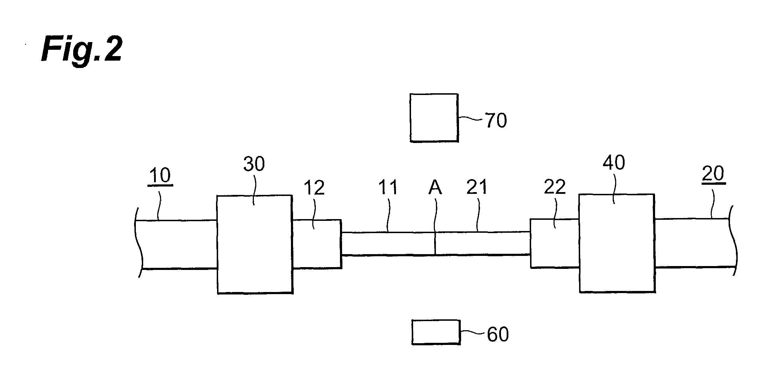

Fig. 2 is a block diagram of a system for carrying out the thermal-strain-removing step in the fabrication method of optical fiber apparatus according to the present embodiment. As illustrated in this figure, the system is provided with a heat source 60 for heating the region in and around the fusion-spliced portion A and a radiation thermometer 70 for measuring the temperature in and around the fusion-spliced portion A, which are placed near the fusion-spliced portion A. The temperature in and around the fusion-spliced portion A is measured by the radiation thermometer 70, and the heating in and around the fusion-spliced portion A by the heat source 60 is controlled so that the temperature measured by the infrared radiation thermometer 70 becomes an adequate value.

The heat source 60 is electrodes for arc discharge, a burner, or a heater (an electric heater, a ceramic heater, or the like).

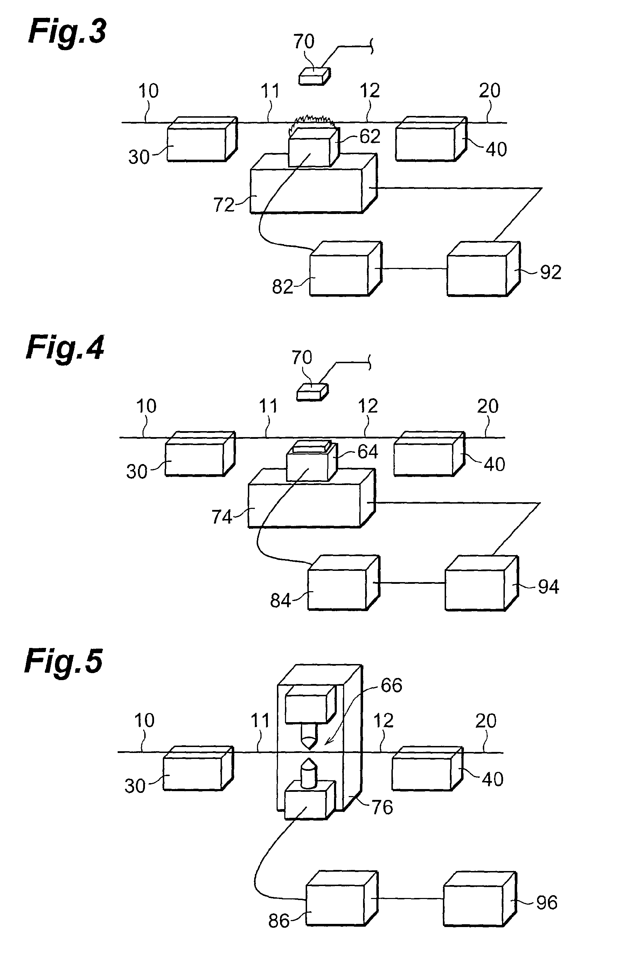

Fig. 3 shows a heating system using a burner. This heating system is provided with a burner 62, a driving device 72 for reciprocally moving the burner 62 along the axial direction of the fibers, a gas supply unit 82 for supplying gas to the burner 62, and a control unit 92 for controlling a gas supply amount of the gas supply unit 82 and a driving distance of the driving unit 72, based on the temperature information from the radiation thermometer 70. The optical fibers 10, 20 with the glass fibers 11, 21 being spliced are held by fiber holders 30, 40.

The radiation thermometer 70 is a combination of a two-dimensional infrared radiation thermometer with a magnifying lens, and measures a temperature distribution in and around the fusion-spliced portion A through the magnifying lens by the two-dimensional infrared radiation thermometer. The emissivity is set to 0.5 in consideration of the shape and material of the glass fibers 11, 21 as a measured object. In the thermal-strain-removing step, the heat source 60 is placed or moved along the axial direction of the fibers so that the temperature distribution measured by this radiation thermometer 70 satisfies the aforementioned relation between the heated region R₁ and the heated region R₂.

Upon activation of this system in this structure, flame is generated with supply of inflammable gas (hydrocarbon gas, e.g., propane gas) and oxygen gas from the gas supply unit 82 to the burner 62, so as to be able to carry out the heating treatment to heat the region in and around the fusion-spliced portion A by this flame. The use of the burner 62 as the heat source 60 is preferred, because it permits the distribution heating in and around the fusion-spliced portion A and the use of the compact heating unit.

Fig. 4 shows a heating system using a heater. This heating system is provided with a heater 64, a driving unit 74 for reciprocally moving the heater 64 along the axial direction of the fibers, a power supply unit 84 for supplying power to the heater 64, and a control unit 94 for controlling a power supply amount of the power supply unit 84 and a driving distance of the driving unit 74, based on the temperature information from the radiation thermometer 70.

Upon activation of the system in this structure, the power supply unit 84 supplies the power to the heater 64 to heat the heater up, thereby implementing the heating treatment of the region in and around the fusion-spliced portion A. The use of the heater 64 as the heat source 60 is preferred, because it permits the distribution heating in and around the fusion-spliced portion A and keeps the heating atmosphere clean.

Fig. 5 shows a heating system of an arc discharge type. This heating system is provided with a discharge section 66 consisting of a pair of electrodes opposed to each other, a driving unit 76 for reciprocally moving the discharge section 66 along the axial direction of the fibers, a power supply unit 86 for supplying power to the discharge section 66, and a control unit 96 for controlling a power supply amount of the power supply unit 86 and a driving distance of the driving unit 76, based on the temperature information from the radiation thermometer.

Upon activation of the system in this structure, the power supply unit 86 supplies the power to the discharge section 66 to induce arc discharge, thereby implementing the heating treatment in and around the fusion-spliced portion A. The use of the discharge section 66 as the heat source 60 is preferred, because the fusion splicer can be used as it is.

In the next place, specific examples of the fabrication method of optical fiber apparatus according to the present embodiment will be described. In Examples 1 to 4 below, single-mode optical fibers of one kind with the core region of silica glass base doped with GeO₂, were used as the optical fibers 10, 20. In Example 5, optical fibers of two kinds having mutually different mode field diameters were used as the optical fibers 10, 20.

In Example 1, the arc discharge was used in the thermal-strain-removing step. Specifically, the end faces of the glass fibers 11, 21 were spliced by arc discharge, using the fusion splicer, and in the thermal-strain-removing step thereafter, the fusion splicer was also used as it was. The thermal strain was removed by heating the wider range than the heated region during the fusion splice, at the heating temperature of 1500°C in and around the fusion-spliced portion while moving the arc discharge electrodes in the longitudinal direction of the fibers around the fusion-spliced portion. The heating period in this thermal-strain-removing step was 10 seconds. Twenty optical fiber apparatus having the fusion-spliced portion were fabricated in this way. A tensile rupture test was carried out for each of the twenty optical fiber apparatus. The 50% rupture strength, which is a strength at which 50% optical fiber apparatus, i.e., ten optical fiber apparatus break, was 24.5 N (2.5 kg) and the rupture strength of sixteen optical fiber apparatus was not less than 19.6 N (2.0 kg), thus meeting with good results.

In Example 2, a compact burner was used in the thermal-strain-removing step. Specifically, the end faces of the glass fibers 11, 21 were spliced each other by arc discharge, using the fusion splicer, and in the thermal-strain-removing step thereafter, another heating unit was used to remove the thermal strain by heating the wider range than the heated region during the fusion splice, in and around the fusion-spliced portion while moving the compact burner along the longitudinal direction around the fusion-spliced portion. In this thermal-strain-removing step the heating temperature was 500°C and the heating period was 20 seconds. At this time, propane gas and oxygen gas was supplied to the burner. Twenty optical fiber apparatus having the fusion-spliced portion were fabricated in this way. The tensile rupture test was conducted for each of the twenty optical fiber apparatus. The 50% rupture strength was 24.5 N (2.5 kg) and the rupture strength of eighteen optical fiber apparatus was not less than 19.6 N (2.0 kg), thus meeting with good results.

In Example 3, an electric heater was used in the thermal-strain-removing step. Specifically, the end faces of the glass fibers 11, 21 were spliced each other by arc discharge, using the fusion splicer, and in the thermal-strain-removing step thereafter, another heating device was used to remove the thermal strain by heating the wider range than the heated region during the fusion splice, in and around the fusion-spliced portion while moving the electric heater along the longitudinal direction around the fusion-spliced portion. In this thermal-strain-removing step the heating temperature was 1000°C and the heating period 10 seconds. Twenty optical fiber apparatus having the fusion-spliced portion were fabricated in this way. The tensile rupture test was carried out for each of the twenty optical fiber apparatus. The 50% rupture strength was 25.48 N (2.6 kg) and the rupture strength of seventeen optical fiber apparatus was not less than 19.6 N (2.0 kg), thus meeting with good results.

In Example 4, the arc discharge was used in the thermal-strain-removing step. Specifically, the end faces of the glass fibers 11, 21 were spliced each other by arc discharge, using the fusion splicer, and in the thermal-strain-removing step thereafter, the fusion splicer was also used as it was, to remove the thermal strain by heating the wider range than the heated region during the fusion splice, at each of heating temperatures in the range of near room temperature to 1800°C in and around the fusion-spliced portion while moving the arc discharge electrodes along the longitudinal direction around the fusion-spliced portion. In the thermal-strain-removing step the heating period was 10 seconds. Twenty optical fiber apparatus having the fusion-spliced portion were fabricated under each of the temperature conditions and the tensile rupture test was conducted for each of the twenty optical fiber elements.

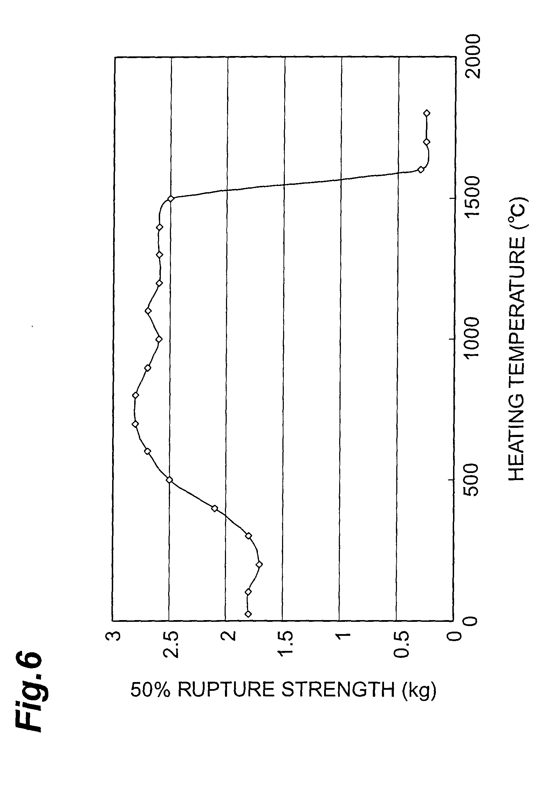

Fig. 6 is a graph to show the relation between 50% rupture strength and heating temperature in the thermal-strain-removing step. As apparent from this graph, the 50% rupture strength was not less than 24.5 N (2.5 kg) in the heating temperature range of not less than 500°C nor more than 1500°C in the thermal-strain-removing step and thus the satisfactory mechanical strength was able to be ensured for the fusion-spliced portion of the optical fiber apparatus. In the heating temperature range of less than 500°C, no improvement was seen in the mechanical strength of the fusion-spliced portion of the optical fiber apparatus. In the heating temperature range over 1500°C, the glass surface was crystallized in part near the fusion-spliced portion of the optical fiber apparatus, so as to further lower the strength of the fusion-spliced portion of the optical fiber apparatus. Similar results were obtained where the heat source was either of the arc discharge, the burner, and the heater.

According to the fabrication method of optical fiber apparatus in the present embodiment, as described above, the end faces of the glass fibers 11, 21 were heated to cause fusion thereof to form the fusion-spliced portion in the fusion step, and in the thermal-strain-removing step thereafter, the heating treatment was carried out to heat the region in and around the fusion-spliced portion (the wider range than the heated region during the fusion splice) at the temperature of not less than 500°C nor more than 1500°C, thereby removing the thermal strain. The thermal strain is caused in and around the fusion-spliced portion during the fusion step, but this thermal strain is removed during the thermal-strain-removing step at the temperature of not less than 500°C nor more than 1500°C. Therefore, the sufficient mechanical strength is ensured in and around the fusion-spliced portion of the optical fiber apparatus. According to the examples, the 50% rupture strength of the optical fiber apparatus was not less than 24.5 N (2.5 kg) thanks to this thermal-strain-removing step.

As detailed above, the fabrication method of optical fiber apparatus according to the present invention is the method having the fusion step of heating the end faces of two optical fibers to cause fusion thereof to form the fusion-spliced portion, and the thermal-strain-removing step thereafter of removing the thermal strain by the heating treatment of the region in and around the fusion-spliced portion (the wider range than the heated region during the fusion splice) at the temperature of not less than 500°C nor more than 1500°C, followed by cooling. The thermal strain occurs in and around the fusion-spliced portion during the fusion step, but this thermal strain is removed in the thermal-strain-removing step at the temperature of not less than 500°C nor more than 1500°C. Therefore, the sufficient mechanical strength is ensured in and around the fusion-spliced portion of optical fiber apparatus. The removed state of thermal strain is also maintained during the cooling after the thermal-strain-removing step, so that the satisfactory mechanical strength is ensured in and around the fusion-spliced portion of optical fiber apparatus.

As described above, the satisfactory mechanical strength of the fusion-spliced portion is ensured without use of the reinforcement with the steel wire, in the optical fiber apparatus fabricated by the fabrication method of optical fiber apparatus according to the present invention. Therefore, the outside diameter of the fusion-spliced portion is not larger than that of the other portions of the optical fibers and thus the stress exerted on the optical fibers around the fusion-spliced portion is relieved during the procedure of forming a cable from the two optical fibers including the fusion-spliced portion, during a procedure of forming a module by winding the fibers around a bobbin, or during other mounting procedures. Further, the risk of fracture of optical fibers is reduced and increase is suppressed in loss of the light propagating in the optical fibers. In addition, the fusion-spliced portion can be readily bent when the two optical fibers including the fusion-spliced portion are wound around the bobbin.

## Claims

1. A method of fabricating an optical fiber apparatus having a fusion-spliced portion in which end faces of two optical fibers are spliced to each other by fusion splicing,
the method comprising:
a fusion step of heating the end face regions of the two optical fibers to cause fusion thereof, thereby forming the fusion-spliced portion; and
a thermal-strain-removing step of removing thermal strain by heat treating a region of said fusion-spliced portion wider than said heated end face regions, at a temperature of not less than 500°C and not more than 1500°C.

2. The method according to Claim 1, wherein in said thermal-strain-removing step said heat treatment is carried out by a heater.

3. The method according to Claim 1 or 2, wherein in said thermal-strain-removing step said heat treatment is carried out by arc discharge.

4. The method according to Claim 1 or 2, wherein in said thermal-strain-removing step said heat treatment is carried out by means of a flame generated with supply of inflammable gas and oxygen gas to a burner.

5. The method according to any of claims 1 to 4, wherein the fusion-spliced portion is cooled after said step of thermal-strain-removing.

6. The method according to claim 5, wherein the rate of cooling is not more than 4000°C per minute.

7. An optical fiber apparatus fabricated by the method as set forth in any of Claims 1 to 6.

8. The optical fiber apparatus according to claim 7, wherein the materials of the fiber are silica-glass based.
